(19) Europäisches Patentamt
European Patent Office
Office européen des brevets

(11) **EP 2 567 442 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **11709093.6**

(22) Anmeldetag: **10.03.2011**

(51) Int Cl.:
*B60R 21/017* (2006.01)          *H02J 7/00* (2006.01)
*H02J 7/34* (2006.01)

(86) Internationale Anmeldenummer:
**PCT/EP2011/053587**

(87) Internationale Veröffentlichungsnummer:
**WO 2011/138074 (10.11.2011 Gazette 2011/45)**

(54) **STEUERGERÄT FÜR EINEN BETRIEB EINES SICHERHEITSSYSTEMS FÜR EIN FAHRZEUG UND VERFAHREN FÜR EINEN BETRIEB EINES SOLCHEN SICHERHEITSSYSTEMS FÜR EIN FAHRZEUG**

CONTROL UNIT FOR OPERATING A SAFETY SYSTEM FOR A VEHICLE AND METHOD FOR OPERATING SUCH A SAFETY SYSTEM FOR A VEHICLE

APPAREIL DE COMMANDE POUR LE FONCTIONNEMENT D'UN SYSTÈME DE SÉCURITÉ D'UN VÉHICULE ET PROCÉDÉ DE FONCTIONNEMENT D'UN TEL SYSTÈME DE SÉCURITÉ DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2010 DE 102010028556**

(43) Veröffentlichungstag der Anmeldung:
**13.03.2013 Patentblatt 2013/11**

(73) Patentinhaber: **Robert Bosch GmbH**
**70442 Stuttgart (DE)**

(72) Erfinder:
• **SIEVERS, Falko**
**72762 Reutlingen (DE)**
• **SCHUMACHER, Hartmut**
**71691 Freiberg (DE)**
• **LIST, Carsten**
**Ludwigsburg 71642 (DE)**

(56) Entgegenhaltungen:
EP-A1- 1 789 286          DE-A1- 10 255 429
DE-A1-102005 034 294      DE-A1-102008 003 080
US-A- 6 094 036

**Beschreibung**

Stand der Technik

Die Erfindung betrifft ein Steuergerät bzw. ein Verfahren für einen Betrieb eines Sicherheitssystems für ein Fahrzeug nach der Gattung der unabhängigen Patentansprüche.

Aus DE 195 42 085 B4 ist eine Sicherheitseinrichtung für Fahrzeuginsassen bekannt, wobei ein Kondensator für die Energiespeicherung und ein erster Spannungswandler vorgesehen sind, der mit der Fahrzeugbatterie verbunden ist und der die Spannung der Fahrzeugbatterie auf ein Mehrfaches der Spannung der Fahrzeugbatterie hinaufsetzt und mit dieser höheren Spannung den Kondensator auflädt. Ein zweiter Spannungswandler ist dafür vorgesehen, über seinen Ausgang mit einem Eingang eines Spannungsstabilisators verbunden zu sein. Weiterhin ist ein die Spannungswandler steuernder Mikrocontroller vorgesehen, und dass die Spannungswandler von einer seriellen Schnittstelle des Mikrocontrollers steuerbar sind. Aus DE 10 2004 057 690 A1 ist eine Vorrichtung und ein Verfahren zum Laden einer elektrischen Energiespeichereinrichtung bekannt. Dabei ist eine aktive Strombegrenzung in einem Hauptstrompfad vorgesehen, um einen Versorgungsstrom auf einen bestimmten Maximalstrom zu begrenzen. Eine Spannungswandlereinrichtung ist der Strombegrenzungseinrichtung zum Anheben des Potentials der elektrischen Energiespeichereinrichtung über ein Versorgungspotential nachgeschaltet angeordnet.

Aus der EP 1 789 286 A1 ist eine Schaltungsanordnung zur kurzzeitigen Aufrechterhaltung einer Versorgungsspannung an einem Eingang eines Lastelements bekannt. Die Erfindung betrifft eine Schaltungsanordnung zur kurzzeitigen Aufrechterhaltung einer Versorgungsspannung zur Ansteuerung eines Lastelements bei Ausfall einer Eingangsspannung, wobei die Eingangsspannung mittels eines Spannungswandlers auf eine höhere Ladespannung zur Aufladung eines dem Spannungswandler nachgeschalteten Kondensators transformiert wird und bei Ausfall der Eingangsspannung, gegebenenfalls in Verbindung mit Notsignalen, z. B. Unfall, Zentralverriegelung öffnen, das Lastelement mit dem Kondensator automatisch elektrisch verbunden wird.

Aus der US6,094,036 A ist eine elektrische Energieversorgung mit einem Spannungsregler und einem Eingangsstrombegrenzer bekannt. Der Eingangsstrombegrenzer weist einen Strombegrenzer und einen Unterstützungskondensator auf. Dabei werden insbesondere beim Einschalten der elektrischen Energieversorgung Spitzen durch den Ladestrom erzeugt. Der Strombegrenzer ist mit dem Unterstützungskondensator in Reihe geschaltet, um so verhindern, dass Ladestrom durch die Strombegrenzungsschaltung fließt. Ein Aufwärtswandler ist in Stromrichtung aufwärts der Strombegrenzungsschaltung nachgeschaltet, um die Spannung des Stroms zu erhöhen.

Offenbarung der Erfindung

Die Erfindung ist durch die Merkmale der unabhängigen Ansprüche offenbart, wobei mögliche Ausführungsformen in den abhängigen Ansprüchen definiert werden.

Das erfindungsgemäße Steuergerät bzw. das erfindungsgemäße Verfahren für einen Betrieb eines Sicherheitssystems für ein Fahrzeug haben demgegenüber den Vorteil, dass nunmehr zwischen dem Aufwärtswandler und dem Energiereservespeicher eine im Betrieb programmierbare Ladestromquelle geschaltet ist, die einen Ladestrom für den wenigstens einen Energiereservespeicher in Abhängigkeit von der Programmierung festlegt. Damit ist eine Entkopplung des Energiereservespeichers vom Aufwärtswandler möglich, so dass verschiedene Anforderungen in einfacher Art und Weise realisiert werden können wie vorzugsweise ein Energiesparmodus für das Steuergerät, in dem der Energiereservespeicher nicht aufgeladen wird, sondern lediglich der Rechner mithin ein Mikrocontroller des Steuergeräts mit Strom versorgt wird und die anderen Komponenten nicht. D. h. die Airbag-Applikation ist in einem solchen vorzugsweise Sparmodus nicht aktiv. Dennoch muss der Wirkungsgrad in einem solchen Modus hoch genug sein, so dass geringe Eingangsstromwerte aus der Fahrzeugspannung möglich sind. Auch kann durch diese Aufteilung durch die Verwendung der Ladestromquelle die Ladegeschwindigkeit des Energiereservespeichers nach Vorgaben leicht eingestellt werden. Wie weiter unten ausgeführt wird, hat die Einführung der Ladestromquelle zwischen Aufwärtswandler und Energiereservespeicher weiterhin den Vorteil, dass die initiale Messung der Kapazität des Energiereservespeichers und des äquivalenten Innenwiderstand des Energiereservespeichers ohne zusätzliche Messstromquellen über die programmierbare Ladestromquelle erfolgen kann. Eine Schnellstartfähigkeit, d. h. eine Bereitschaft der Airbagversorgung in einer Zeit von unter 5 ms ohne zusätzliche externe Bauteile ist durch die programmierbare Ladestromquelle weiterhin möglich.

Weiterhin kann eine kapazitive Last parallel zur Energiereserve, um Risiken hinsichtlich eines Abrisses der Energiereserve zu vermeiden, weggelassen werden, da nunmehr die programmierbare Ladestromquelle zwischen dem Energiereservespeicher und dem Aufwärtswandler vorgesehen ist. Außerdem stellt die Ankopplung des Energiereservespeichers über die programmierbare Ladestromquelle an den Aufwärtswandler sicher, dass ein Kurzschluss oder ein erhöhter Leckstrom des Energiereservespeichers nicht zum Zusammenbruch der Airbagversorgung führt, da der Aufwärtswandler einen eigenen Ausgang, belastet beispielsweise wie es aus den abhängigen Ansprüchen hervorgeht mit einer kapazitiven Last besitzt und der Entnahmestrom, der durch die programmierbare Ladestromquelle begrenzt wird, innerhalb der Fähigkeit des Aufwärtswandlers liegt.

Insbesondere, wie oben angedeutet, bedeutet die Einfügung der programmierbaren Ladestromquelle zwischen Aufwärtswandler und Energiereservespeicher, dass die Kapazität des Energiereservespeichers automatisch während dem Ladevorgang bestimmt werden kann. Dies kann dann bei sehr kleinen Spannungen an dem Energiereservespeicher bei ca. 11 V bereits erreicht werden, so dass ein möglicher Einfluss eines Leckstroms des Energiereservespeichers stark reduziert wird. Die gesteigerte Messgenauigkeit führt zu einer kleineren Auslegung des Energiereservespeichers.

Die Programmierbarkeit der Ladestromquelle ermöglicht, dass nach jedem Power-On-Reset durch die Software der Ladestromgrenzwert neu definiert und eingeschaltet werden kann.

Unter einem Steuergerät ist vorliegend ein elektrisches Gerät zu verstehen, das Sensorsignale verarbeitet und in Abhängigkeit davon ein Sicherheitssystem, wie es beispielsweise ein passives Personenschutzsystem mit Airbags und Gurtstraffern ist, ansteuert. Das Steuergerät weist üblicherweise ein eigenes Gehäuse aus Metall und/oder Kunststoff auf; es kann jedoch auch, zumindest teilweise, mit verteilten Komponenten auf verschiedene Geräte aufgebaut sein. Aktive und passive Sicherheit können dabei in einem gemeinsamen Gehäuse angeordnet sein.

Der Betrieb des Sicherheitssystems heißt, dass das Sicherheitssystem in einem sicherheitsrelevanten Fall, für den es ausgelegt ist, aktiviert wird. Kommt es beispielsweise zu einem Unfall, der die Ansteuerung eines Airbags notwendig macht, wird das Steuergerät ein Ansteuerungssignal ausgeben, um die entsprechenden Airbags anzusteuern.

Unter dem Sicherheitssystem wird vorliegend ein passives Sicherheitssystem wie Airbags oder Gurtstraffer, aber auch ein aktives Sicherheitssystem, wie eine elektronische Stabilitätsregelung des Fahrzeugs oder einer Antischlupfregelung verstanden.

Ein Aufwärtswandler ist ein üblicherweise elektronisches Bauteil mit einer Induktivität, das die Eingangsspannung auf eine im Vergleich zur Eingangsspannung erhöhte Ausgangsspannung wandelt. Dafür ist der Aufwärtswandler als ein Schaltwandler ausgebildet. Ein solcher Aufwärtswandler weist beispielsweise eine Induktivität mithin eine Spule, die in Reihe mit einer Freilaufdiode oder einem Freilauftransistor, der vorliegend integriert realisierbar ist, geschaltet ist. Hinter der Freilaufdiode ist ein Ladekondensator vorgesehen, der die Ausgangsspannungen aufsummiert. Die Spule wird durch einen Schalter gegen Masse geschaltet. An der Spule fällt eine Eingangsspannung ab, wobei der Strom durch die Spule und damit die im Magnetfeld gespeicherte Energie ansteigt. Wird der Schalter geöffnet, versucht die Spule den Stromfluss aufrechtzuerhalten. Die Spannung an ihrem sekundären Ende steigt sehr schnell an, bis die am Kondensator anliegende Spannung übersteigt und die Diode öffnet. Der Strom fließt im ersten Moment unverändert weiter und lädt den Kondensator weiter auf. Das Magnetfeld bricht dabei zusammen und gibt seine Energie ab, indem es den Strom über die Diode in den Ladekondensator und zur Last treibt. Allgemein ausgedrückt wirkt die Induktivität im Ladevorgang als eine Last und absorbiert Energie und im Entladevorgang wirkt diese als eine Energiequelle, ähnlich einer Batterie. Daher unterscheidet man die Ladephase und die sogenannte Freilaufphase. In der Freilaufphase wird Energie zum Ausgang des Aufwärtswandlers transportiert.

Die von der Fahrzeugbatterie abgeleitete Eingangsspannung ist beispielsweise eine gefilterte und verpolgeschützte Spannung, die sich direkt von der Fahrzeugbatteriespannung ableitet.

Die Ladespannung am Ausgang des Aufwärtswandlers ist höher als die Eingangsspannung, so dass sich der Begriff des Aufwärtswandlers erklärt.

Der wenigstens eine Energiereservespeicher ist üblicherweise ein oder mehrere Kondensatoren, der mit der Ladespannung, die am Ausgang des Aufwärtswandlers anliegt, für den Betrieb des Sicherheitssystems in einem Autarkiefall aufgeladen wird. Der Autarkiefall ist, wenn die Versorgung zur Fahrzeugbatterie in Folge beispielsweise eines Unfalls abbricht. Bei der im Betrieb programmierbaren Ladestromquelle handelt es sich üblicherweise um einen Stromregler. Dabei handelt es sich um eine Transistorschaltung, die wie ein Stromventil wirkt, wobei eine Logik enthalten ist, die die Programmierung in einen entsprechenden Stromwert umsetzt. Damit kann der Ladestrom während dem Betrieb, d. h. wenn das Fahrzeug eingeschaltet ist und die Batteriespannung anliegt, abhängig von der Situation eingestellt werden. Diese Programmierung kann beispielsweise der Mikrocontroller im Steuergerät ausführen. Die programmierbare Ladestromquelle kann als Stromspiegel oder als Stromregler mit Shuntwiderstand ausgeführt sein.

Programmierung heißt vorliegend, dass im Betrieb die Ladestromquelle Signale erhält, die die Ladestromquelle derart interpretiert, dass sie einen Wert für den Ladestrom ergeben.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens für einen Betrieb eines Sicherheitssystems für ein Fahrzeug möglich.

Es ist vorteilhaft, dass für die Programmierung eine serielle Schnittstelle vorgesehen ist, an die ein Rechner, beispielsweise ein Mikrocontroller im Steuergerät anschließbar ist, um die Programmierungen vorzunehmen. Als serielle Schnittstelle bietet sich hierbei die sogenannte SPI-Schnittstelle an, das ist die Serial Peripheral Interface Schnittstelle. Diese Schnittstelle weist üblicherweise parallel 3 + n (0..7) Leitungen auf, die unterschiedliche Signale aufweisen wie beispielsweise Takt, Master In Slave Out (MISO), Master Out Slave In (MOSI) und n Chip Select Leitungen für jeden angeschlossenen Slave Baustein. Dies ermöglicht eine besonders einfache Programmierung und Kommunikation im Steuergerät. Insbesondere ist es möglich, den Aufwärtswandler und die Ladestromquelle sowie weitere Komponenten wie beispielsweise Abwärtswandler in einem einzigen System-ASIC, d. h. auf einer integrierten Schaltung auf einem einzigen Substrat zu integrieren. Auch über einen einstellbaren Widerstand oder Programmierpins kann die Programmierung erfolgen. Die Programmierpins bei binärem Pegeln entsprechen dabei der Bitzahl des Programmierworts.

Es ist weiterhin vorteilhaft, dass am Ausgang des Aufwärtswandlers eine kapazitive Last zur Summierung der abgegebenen induktiven Schaltströme des Aufwärtswandlers abgegeben über eine Freilaufdiode oder einem synchrone gesteuerten Freilauftransistor angeschlossen ist. Diese kapazitive Last sollte möglichst klein sein. Das ist erreichbar durch einen Wandler mit hoher Taktfrequenz mit 1 bis 10 MHz. Die Zielwerte sollten in einem Bereich von 1 bis 20 $\mu$F liegen und durch sogenannte Multi Layer Ceramic Chip Capacitors (MLCC) realisiert sein. Durch Reduzierung der Ausgangskapazität des Aufwärtswandlers auf diese Werte sind keine weiteren Maßnahmen zur Anlaufstrombegrenzung aus dem Bordnetz notwendig (Kostenreduzierung). Der Anlaufstrom beschränkt sich auf wenige $\mu$s (<30$\mu$s) und wird in der Amplitude sehr stark durch die Impedanz des Bordnetzes bestimmt. Außerdem kann durch diese kapazitive Last ein stabiler Betrieb des Aufwärtswandlers erreicht werden. Dies wird ermöglicht durch Abstimmung des Reglers auf diese Last. Dazu muss eine Mitkopplung sicher vermieden werden (Instabilität). Dies kann gezielt durch die Nutzung von unvermeidlichen Serienwiderständen / Induktivitäten zwischen Freilaufkreis und Ausgangskapazität (Definition des Widerstandes / Induktivität der Leiterbahn, Bonddrähten zwischen Freilaufdiode und Ausgangskapazität) ohne zusätzliche Kosten verbessert werden.

Darüber hinaus ist es vorteilhaft, dass das Steuergerät eine Logik aufweist, die in Abhängigkeit von wenigstens einem elektrischen Parameter am wenigstens einen Energiereservespeicher während des Aufladens des Energiereservespeichers eine initiale Messung einer Kapazität des wenigstens einen Energiereservespeichers und im Anschluss daran eine Messung eines äquivalenten Innenwiderstands des wenigstens einen Energiereservespeichers ausführt. Diese Logik ist üblicherweise im Mikrocontroller vorhanden, der die dazu nötigen Daten über beispielsweise den Spannungsverlauf am wenigstens einen Energiereservespeicher ausliest. Über die SPI-Schnittstelle und in Abhängigkeit davon werden die initiale Messung der Kapazität und die Messung des Innenwiderstands ausgelöst. Der Begriff des Aufladens des wenigstens einen Energiespeichers ist vorliegend dahingehend gemeint, dass dies das Aufladen des Energiespeichers nach einem Einschalten bzw. Power-On des Steuergeräts ist.

Vorteilhafter Weise weist die Logik wenigstens einen Komparator für einen Vergleich des wenigstens einen elektrischen Parameters, üblicherweise einer Spannung vorliegend beispielsweise die über dem elektrischen Energiereservespeicher mit einer vorgebbaren Schwelle aufweist, wobei die initiale Messung der Kapazität und die Messung des Innenwiderstands in Abhängigkeit von diesem Vergleich ausgeführt wird. D. h. erreicht die Spannung über dem Energiereservespeicher mit dem Kondensator einen vorgegebenen Wert, dann wird die Messung der Kapazität ausgeführt. Durch die Verwendung beispielsweise von zwei Komparatorwerten kann die Ladezeit mittels eines integrierten Zählers, beispielsweise 10bit/10KHz, ermittelt werden, die benötigt wird, um ein vorgegebenes Messband zu durchlaufen. Als Messstrom kann dabei einheitlich 90 mA verwendet werden. Damit ergibt sich die Kapazität nach folgender Formel:

$$CER = Messstrom \times Ladezeit/Messband.$$

Auch für die Messung des sogenannten äquivalenten Innenwiderstands der Energiereserve mithin Energiereservespeichers können zwei Komparatorwerte verwendet werden, um festzustellen, ob der Innenwiderstand des Energiereservespeichers ausreichend klein ist. Beispielsweise bei einer Messstromänderung von 90 mA auf 930 mA wird eine Spannungsänderung beispielsweise 0,5V realisiert durch eine Komparatorschwelle 10 $\mu$s nach Ändern des Messstroms abgefragt. Ist diese überschritten, so beträgt der Innenwiderstand beispielsweise < 0,6 Ohm. Bei einer Spannungsänderung von beispielsweise 1V wird eine zweite Komparatorteststelle nach Anlegen des Messstroms abgefragt. Ist diese überschritten, so beträgt der Innenwiderstand mehr als 1,2 Ohm. Die Ablaufsteuerung kann mithin im Mikrocontroller, aber auch durch Logik im ASIC hardwaremäßig realisiert sein. Ebenso kann die Messeinrichtung durch den ADC (Analog-Digital-Converter) des Mikrocontrollers oder durch Spannungs-Komparatoren und Zähler im System-ASIC realisiert sein. Den Start der Messung kann der Mikrokontroller im ASIC anregen, der genaue Startzeitpunkt erfolgt durch die Hardware beim Erreichen von VER_min. Das Anregen kann z.B. durch Lesen des Ergebnisregisters der initialen Kapazität erfolgen. Das Ergebnisregister wird nicht überschieben, wenn keine Messung ausgeführt wird.

Weiterhin ist es vorteilhaft, dass die Logik derart ausgebildet ist, dass die Logik nach dem Aufladen des Energiereservespeichers zyklisch eine weitere Messung der Kapazität ausführen kann. Auch hierfür kann eine Komparatorschwelle verwendet werden. Diese Messung startet nach einem Lesevorgang des Mikrocontrollers auf das Ergebnisregister der zyklischen Kapazitätsmessung. Durch diesen Vorgang wird die Ladestromquelle gesperrt. Die Spannung sinkt durch nicht kostenrelevante Lasten, beispielsweise an einem Spannungsteiler ab. Erreicht die Spannung über dem Energiereservespeicher einen vorgegebenen Wert, so wird mit dem Messstrom die Energiereserve wieder geladen, bis ein weiterer Wert erreicht wird. Durch die Wahl eines verringerten Messhubs und eines darauf entsprechend abgestimmten Messstroms bleibt die Auflösung von $\mu$F zu Digit exakt auf dem Wert der initialen Kapazitätsmessung.

In einer Weiterbildung ist vorgesehen, dass Messfehler in der Kapazitäts- und Innenwiderstandsmessung vermieden werden als Folge eines Einbruchs der Batteriespannung, indem die Eingangsspannung mit einem Komparator überwacht wird. Sinkt diese unter den durch den Komparator vorbestimmten Wert, wird jede laufende Messung mit nicht ausführbar in einem Messspeicher gekennzeichnet. Eine Alternative dazu ist, dass der Stromregler der Ladestromquelle einen Einregelstatus in der Messanwendung erzeugt. Nur wenn dieser bis auf Einschwíngzeiten die gleiche Einregelzeit erreicht wie die Messzeit selbst, ist die laufende Messung ohne Störung verlaufen und damit als gültig anzusehen. D.h. die Einregelung erfolgt sofort auf den Zielstrom und verbleibt in diesem eingeregelten Zustand bis zum Ende der Messzeit. Andernfalls erhält der Messwert im Messspeicher eine "nicht-ausführbar-Kennzeichnung". Zur Erfassung des Ein-Regel-Status kann ebenfalls ein 10-Bit-Zähler mit einer Taktfrequenz von 10 kHz eingesetzt werden. Auch geringere Auflösungen sind denkbar.

Es ist weiterhin vorteilhaft, dass die Aufladung des wenigstens einen Energiereservespeichers durch die Ladestromquelle in einem ersten Zeitabschnitt und einem dritten Zeitabschnitt mit einem ersten Stromniveau, in einem zweiten Zeitabschnitt mit einem Teststrom und in einem vierten Zeitabschnitt mit einem zweiten Stromniveau, das unter dem ersten Stromniveau liegt, erfolgt, wobei der erste, zweite, dritte und vierte Zeitabschnitt in dieser Reihenfolge aufeinander folgen und im zweiten Zeitabschnitt eine initiale Messung der Kapazität und des Innenwiderstands des Energiereservespeichers erfolgen. Die Umschaltung zwischen dem ersten Stromniveau und dem Teststromniveau sowie zwischen dem ersten und dem zweiten Stromniveau erfolgt aufgrund einer Spannung über dem Energiereservespeicher. D. h. die Spannung über dem Energiereservespeicher wird mit vorgegebenen Schwellwerten verglichen.

Es ist weiterhin vorteilhaft, dass das Steuergerät im Energiesparmodus anläuft. Da sich nahezu synchrone mit dem Einschalten der Steuergerätespannung die Aufwärtswandler Ausgangsspannung bilden kann, da der oder die Energiereservespeicher nicht geladen werden (Ladestromquelle bleibt zunächst gesperrt). Durch wenigstens einen an den Ausgang des Aufwärtswandlers angeschlossenen Abwärtswandler wird der Rechner (Mikrocontroller mit elektrischer Energie versorgt, d. h. vorliegend ist ein Energiesparmodus vorgesehen, der die Entnahme aus der Fahrzeugbatterie verringert, indem vorteilhafter Weise die Ladestromquelle dazu genutzt wird, diese Aufladung des Steuergeräte internen Energie-Speichers aus dieser zu vermeiden bzw.

erst durchzuführen wenn dies gewünscht ist ($\mu$C- Programm, Datentransfer über CAN, FLEXRAY, LIN). Beim Abwärtswandler wird die Eingangsspannung auf eine geringere Ausgangsspannung gewandelt. Eine vorteilhafte Ausprägung der Abwärtswandlerkonfiguration ist zwei Abwärtswandler in Serie zu schalten, die die Spannung schrittweise herunterwandeln. Diese beiden Abwärtswandler sind genauso kapazitiv belastet wie der Aufwärtswandler. Dieser Energiesparmodus wird beispielsweise für Autos in Ausstellungsräumen eingesetzt, indem beispielsweise über einen Diagnosetester das Steuergerät den Befehl erhält, in diesen Energiesparmodus zu gehen. Andere Möglichkeiten für den Energiesparmodus sind keyless entry, bei dem ein definierter Zustand eingeschaltet wird, ohne die eigentliche Applikation zu starten.

Ausführungsbeispiele der Erfindung sind in der Zeichnung dargestellt und werden in der nachfolgenden Beschreibung näher erläutert.

Es zeigen

> Figur 1 ein Blockschaltbild des erfindungsgemäßen Steuergeräts,
> Figur 2 ein Flussdiagramm des erfindungsgemäßen Verfahrens,
> Figur 3 ein weiteres Flussdiagramm des erfindungsgemäßen Verfahrens,
> Figur 4 ein weiteres Blockschaltbild des erfindungsgemäßen Steuergeräts,
> Figur 5 ein Zeitdiagramm für Transistoren in den Schaltwandlern,
> Figur 6 ein Spannungszeitdiagramm,
> Figur 7 ein weiteres Spannungszeitdiagramm.

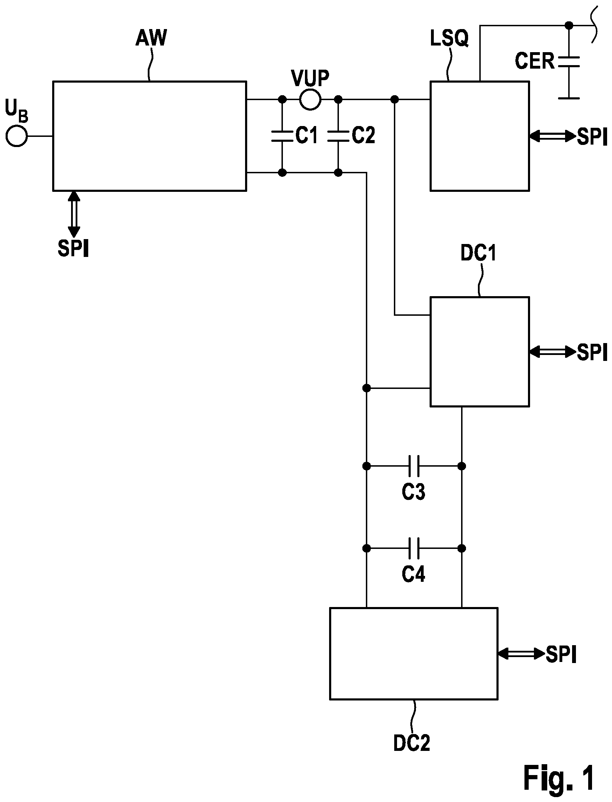

Figur 1 zeigt in einem Blockschaltbild einen Teil des Steuergeräts, der die Erfindung beinhaltet. Die Batteriespannung UB wird beispielsweise über Filter und/oder einen Verpolschutz an einen Aufwärtswandler AW, und zwar an dessen Eingang angelegt, so dass der Aufwärtswandler AW die Batteriespannung UB oder die davon abgeleitete Spannung auf ein vorgegebenes Niveau anhebt. Die Ausgangsspannung am parallel zum Ausgang über ein Stück Leiterbahn nachgeschalteten Kondensator C1 ist mit VUP bezeichnet. Der Aufwärtswandler AW ist vorwiegend über eine SPI-Schnittstelle steuerbar, dabei können vor allem folgende Parameter verändert werden: AN/AUS, Taktfrequenz, Flankensteilheit Transistor T1, T2, Strombegrenzung T1, T2, Ausgangsspannung 23...25V/ 31...35V). Die am Ausgang parallel geschalteten Kondensatoren C1 und C2 sind vorliegend die sogenannten Multi Layer Ceramic Chip Capacitors (MLCC), die eine Größe von 1 bis 20 $\mu$F aufweisen und einen stabilen Betrieb des Aufwärtswandlers gewährleisten. Diese Kondensatoren C1 und C2 weisen eine niedrige Impedanz auf, aber bei der hohen Wandlerfrequenz, die vorliegend verwendet wird, nämlich beispielsweise 1800 bis 2200 kHz, wodurch sich Störungen im Mittelwellenbereich vermeiden lassen, wird dennoch eine stabile Regelung erreicht. Durch gezielte, definierte Layout-Maßnahmen lässt sich der Induktivitätsbelag von beispielsweise 5...15mOhm/5-10 nH pro Zentimeter der Anbindung dieser Wandlerausgangskapazitäten zur Erzielung von ausreichenden Impedanzwerten benutzen. Dabei hat sich ein Wert von 0,125Ohm für 1 cm Länge zu 0,5mm Breite zu 35μm Dicke zur Anbindung der Ausgangskapazität C1 und C2 als vorteilhaft erwiesen. Der vom Wandler abgegebene Strom ruft am Induktivitätsbelag von C1 und C2 ohne Zeitverzug eine Spannung hervor, wodurch eine stabile Regelung ermöglicht wird. Die in Figur 1 nachfolgend dargestellten Abwärtswandler DC1 und DC2, die an den Ausgang des Aufwärtswandlers AW in Serie angeschlossen sind, werden derart platziert, und zwar auf einem gemeinsamen ASIC, d. h. einer gemeinsam integrierten Schaltung, in der der Aufwärtswandler die beiden Abwärtswandler DC1 und DC2 sowie auch die Ladestromquelle LSQ angeordnet sind, dass die Wandlerausgangskapazität des Aufwärtswandlers AW mit einer Leiterbahn von 1cm Länge/0,5mm Breite/35μm Dicke angeschlossen werden kann, wodurch ein Widerstandsbelag zu Induktivität von 5...15mOhm/5-10 nH entsteht und damit der Wandler in der Regel stabil ist. Gleichzeitig kann aber auch mit der selben Kapazität die Funktion einer Eingangspufferkapazität des folgenden Wandlers, d. h. DC1 und DC2 erzielt werden, wenn diese mit kleiner Leiterbahnenlänge von 0 bis 5mm an den Eingang der folgenden Wandlerstufe gekoppelt wird. Dadurch wird der Spannungsbrumm reduziert und die Abstrahlung verringert. Dieses Verfahren kann auch für die Kopplung der beiden Abwärtswandler DC1 und DC2 entsprechend verwendet werden.

Die Ausgangsspannung VUP, d. h. die anspruchsgemäße Ladespannung wird von der Ladestromquelle LSQ dazu verwendet, die am Ausgang der Ladestromquelle angeschlossene Energiereserve CER, das ist der Energiereservespeicher, aufzuladen, um für den Autarkiefall gerüstet zu sein. Die Zündung wird jedoch meist immer über diese Kapazität CER, d. h. auch im Nichtautarkiefall durchgeführt. Die Zielspannung ist hier mit VER bezeichnet. Auch die Ladungsstromquelle LSQ und auch die Abwärtswandler DC1 und DC2 sind über die serielle Schnittstelle SPI, vorzugsweise durch den Mikrocontroller, der vorliegend nicht dargestellt ist, ansteuerbar und programmierbar. Bezüglich der Ladestromquelle LSQ ist eine Programmierung dahingehend notwendig, welcher Strom zur Aufladung des Kondensators CER verwendet wird. Bei dem Kondensator CER handelt es sich üblicherweise um einen Elektrolytkondensatoren; es sind jedoch auch andere Kondensatortypen möglich. Ebenso kann auch die Höhe des Kapazitäts und ESR Messstromes einstellbar sein, ebenso die Taktfrequenz der Zeitmessung.

Die Ladestromquelle LSQ weist einen Stromregler auf. Ein solcher Stromregler regelt den Strom auf den programmierten Strom, der vom Mikrocontroller des Steuergeräts festgelegt wurde. Mit dieser Programmierung des Stroms ist es möglich, in der Aufladephase nach dem Einschalten des Steuergeräts bereits eine Initialmessung der Kapazität und des äquivalenten Innenwiderstands des Kondensators CER durchzuführen. Diese Messung ist notwendig, um die Funktionsfähigkeit dieses Kondensators nachzuweisen, so dass für die Zündung beispielsweise von Airbags oder Gurtstraffern die Energiereserve auch verwendet werden kann. Die Messergebnisse werden im Steuergerät vorteilhafterweise abgespeichert, um für einen späteren Funktionsnachweis zur Verfügung zu stehen. Komponenten, die nicht notwendig sind zum Verständnis der Erfindung, aber zum Betrieb des Steuergeräts gehören, sind der Einfachheit halber vorliegend weggelassen worden.

Durch die Einstellung des Ladestroms ist auch die Anstiegsgeschwindigkeit, mit der die Kapazität CER auf ihre vorgegebene Spannung aufgeladen wird, einstellbar. Außerdem sind Betriebsarten wie ein Stromsparmodus möglich, indem die Ladestromquelle in einem solchen Stromsparmodus den Kondensator CER nicht auflädt. Der Mikrocontroller, der in einem solchen Stromsparmodus, auch als Eco-Mode bezeichnet, betrieben werden soll, wird dann über die an den Aufwärtswandler direkt gekoppelten Abwärtswandler DC1 und DC2 mit der notwendigen Energie versorgt. Durch die Einstellung der Ladegeschwindigkeit der Energiereserve CER ist es möglich, eine vorgegeben System-Ready-Zeit einzustellen.

An die Energiereserve CER sind die Zündschaltungen angeschlossen, so dass die Energiereserve CER diese im Ansteuerungsfall mit Energie versorgen kann. Über die Abwärtswandler DC1 und DC2 werden die übrigen Komponenten des Steuergeräts im Autarkiefall versorgt.

Die Abwärtswandler DC1 und DC2 werden zumindest teilweise invertiert zum Aufwärtswandler AW betrieben. Auch sie weisen jeweils Induktivitäten auf und haben die Aufgabe, die Spannungen entsprechend herunterzuwandeln. An die Abwärtswandler sind Schnittstellen angeschlossen, um mit den entsprechenden Spannungspegeln die Elektronik im Steuergerät zu versorgen. Zu solchen Spannungspegeln wird weiter unten ausgeführt. Es ist möglich, dass der Abwärtswandler DC1 keine solche Versorgung vornimmt, sondern die Spannung auf ein erstes Niveau herunterwandelt, das der zweite Spannungswandler DC2 verwendet, um es weiter herunterzuwandeln. Außerdem sind die Abwärtswandler DC1 und DC2 zumindest teilweise invertiert zum Aufwärtswandler AV betrieben. Wenn zumindest ein Abwärtswandler am Ausgang des Aufwärtswandler AW angeschlossen ist, wird die Spannung VUP reduziert und damit die Spannung VER ebenfalls. Bei fehlender Energiereserve CER oder defektem Aufwärtswandler wird die Batteriespannung auf die Ausgangsspannung dieses Abwärtswandlers reduziert. Der invertierte Betrieb von Auf- und Abwärtswandler bedeutet, dass im Aufwärtswandler die Ladephase gestartet wird und dann im Abwärtswandler die sogenannte Freilaufphase gestartet wird. Die Ladephase heißt, dass die Induktivität aufgeladen wird und die Freilaufphase, dass die Energie aus der Induktivität abgegeben wird. Zwischen diesen beiden Phasen wird in einem Schaltwandler geschaltet. Befindet sich der Aufwärtswandler AW in der Freilaufphase, d. h. in der Phase, in der Energie zum Ausgang VUP transportiert wird, so wird mit einer bestimmten Phasenüberdeckung vom Abwärtswandler DC1 sofort wieder Energie vom Ausgang VUP entnommen. Dadurch wird der Wechselanteil der VUP-Regelspannung reduziert und somit ein Beitrag geleistet mit möglichst kleinen, kostengünstigen Keramikkondensatoren am Ausgang VUP auszukommen. Die Keramikkondensatoren sind die Kondensatoren C1 und C2 bzw. zwischen den beiden Abwärtswandlern DC1 und DC2, C3 und C4.

An die Ausgangsspannung des Abwärtswandlers DC1 ist ein weiterer Abwärtswandler zur Erzeugung einer Spannung von 1,2 bis 3,3 V, die durch Hardware programmierbar sind, angeschlossen. Dieser zweite Abwärtswandler DC2 wird ebenso wie der erste DC1 invertiert zum Aufwärtswandler betrieben. Dadurch wird am Ausgang des ersten Abwärtswandlers exakt im Moment anwachsender Ausgangsspannung durch Energieabnahme durch den zweiten Abwärtswandler entgegengewirkt. Damit wird ebenfalls der Wechselanteil der Ausgangsspannung des ersten Abwärtswandlers DC1 verringert und damit die Reduzierung der Kapazität am Ausgang des ersten Abwärtswandlers von beispielsweise 150 $\mu$F auf ca. 30 $\mu$F unterstützt.

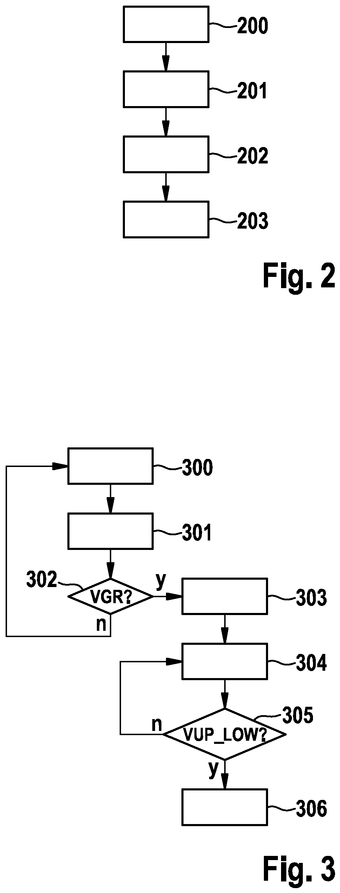

Das Flussdiagramm gemäß Figur 2 erläutert das erfindungsgemäße Verfahren. Im Verfahrensschritt 200 wird die Batteriespannung UB beispielsweise gefiltert oder verpol geschützt, aber zumindest bereitgestellt am Eingang des Aufwärtswandlers AW. Im Verfahrensschritt 201 führt dieser Aufwärtswandler AW das Aufwärtswandeln durch, indem er als Schaltwandler betrieben wird. Dadurch ist am Ausgang des Aufwärtswandlers AW die Spannung VUP messbar. Über die serielle Schnittstelle SPI wird die Ladestromquelle SLQ programmiert, so dass sie in Abhängigkeit von der Ladespannung VUP mit einem entsprechenden Strom den Kondensator CER, der der Energiereservespeicher oder Energiereserve oder Energiereservekondensator ist, aufgeladen wird, und zwar auf die Spannung VER. Dies erfolgt im Verfahrensschritt 203.

Figur 3 verfeinert dieses Flussdiagramm in einem weiteren Flussdiagramm, wobei der Verfahrensschritt 203 im Verfahrensschritt 300 aufgegriffen wird und die vorhergehenden Verfahrensschritten aus Figur 2 nun nicht mehr aufgeführt werden. Während dem Aufladen des Kondensators im Verfahrensschritt 300 wird im Verfahrensschritt 301 die Spannung am Kondensator gemessen, beispielsweise durch den Mikrocontroller oder durch den System-ASIC, der auch die Wandler selbst beinhaltet. Diese Spannung wird im Verfahrensschritt 302 geprüft, ob die Spannung am Kondensator die Schwelle VER_min erreicht hat. Ist das nicht der Fall, wird zum Verfahrensschritt 300 zurückgesprungen. Ist das jedoch der Fall, kann entweder direkt zum Verfahrensschritt 303 weitergegangen werden oder es wird solange gewartet bis ein Testbefehl über SPI ausgegeben wird, um die Kapazität des Kondensators CER und seines äquivalenten Innenwiderstand ESR initial zu messen. Danach wird das Aufladen im Verfahrensschritt 304 wieder aufgenommen. Die Messung der Kapazität bzw. auch die Messung des Innenwiderstands ESR wird mit einem Messstrom durchgeführt, der vom Ladestrom abweichen kann.

Im Verfahrensschritt 304 wird der Ladestrom aus Verfahrensschritt 300 wieder aufgenommen, entweder automatisch oder nach Aufforderung durch den Mikrocontroller $\mu$C über die serielle Schnittstelle SPI. In dieser zweiten Aufladephase wird im Verfahrensschritt 305 geprüft, ob die Ladespannung am Kondensator CER den Wert VUP_low erreicht hat, der höher ist als die Spannung VER_min. Ist dies nicht der Fall, wird die Aufladung mit dem Ladestrom fortgeführt. Ist das jedoch der Fall, wird im Verfahrensschritt 306 die Programmierung der Ladestromquelle LSQ derart geändert, dass nunmehr einen Erhaltungsstrom verwendet wird, der geringer als der Ladestrom aus den Verfahrensschritten 300 und 304 ist. Dieser Erhaltungsstrom wird verwendet, um die Zielspannung VUP zu erreichen und den Kondensator auf dieser Spannung zu halten. Der Aufwärtswandler wird mit einer derart hohen Frequenz betrieben und durch die Ausgangskondensatoren geglättet, dass die Ladestromquelle dies als Gleichstrom interpretiert.

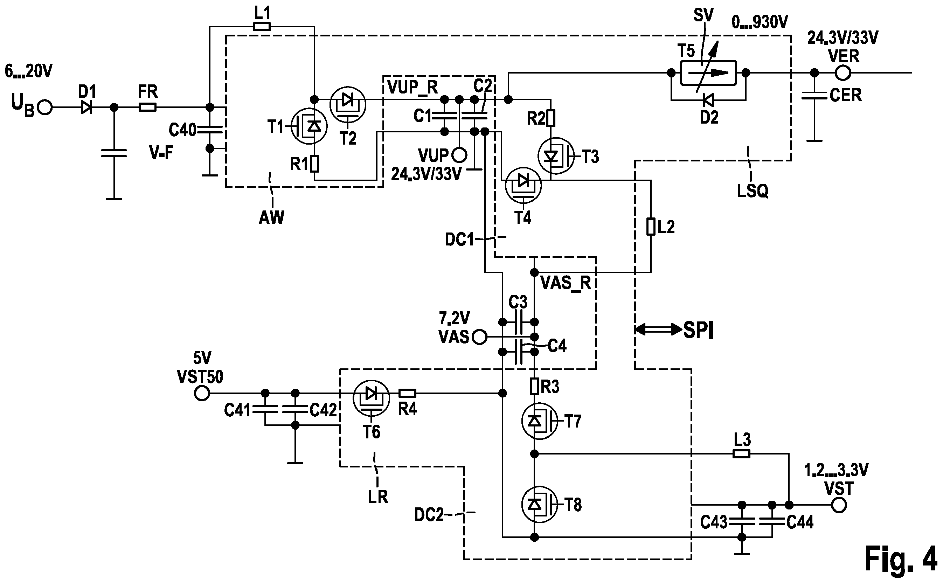

Figur 4 zeigt ein ausführliches Schaltbild von Komponenten des Steuergeräts, die die Erfindung beinhalten. Die Batteriespannung UB, die einen Wert zwischen 26 V annehmen kann, ist an einer Diode D1 in Flussrichtung angeschlossen, die als Verpolschutz dient. An die Diode D1 ist ein V-Filter V-F mit Ableitung gegen Masse angeschlossen , dies bezieht sich auf den Kondensator V-F und C40. An die Diode und den Kondensator V-F ist ein Ferrit FA angeschlossen, der an einen Eingangskondensator C40, der gegen Masse geschaltet ist und die Induktivität L1 des Aufwärtswandlers AW sowie den Eingang des Aufwärtswandlers AW bezüglich seiner Elektronik. Der Aufwärtswandler AW ist mit dem Abwärtswandlern DC1 und DC2 sowie einem Linearregler LR und der Ladungsstromquelle auf einem gemeinsamen System-ASIC integriert, der auch noch weitere Komponenten beinhalten kann. Dieser System-ASIC kann die Komponenten auf einem einzigen Substrat oder auf mehreren Substraten enthalten.

Der Aufwärtswandler AW weist den N-Kanal Ladetransistor T1 auf, der über seinen Drainanschlüsse an die Induktivität L1 und über seinen Sourceanschluss über einen Widerstand R1 gegen Masse angeschlossen ist. Außerdem ist ein Freilauf P-Kanal Transistor T2 vorhanden, dieser ist mit seinem Sourceanschluss an die Induktivität und den Transistor T1 (Drain) angeschlossen und mit seinem Drainanschluss mit dem Eingang des Aufwärtswandler-Reglers VUP$_r$ verbunden. Anstelle des synchron gesteuerten Transistors T2 kann auch eine einfache ultra-schnelle Freilaufdiode (Shottky-Diode) verwendet werden.

Diese ist mit der Anode an der Induktivität und T1 (Drain) angeschlossen und mit der Kathode an VUPr.

An VUPr ist die Parallelschaltung der Kondensatoren C1 und C2 angeschlossen. In dieser Parallelschaltung wird die Spannung VUP, die zwischen 22 und 34 V ist, abgegriffen. Die Spannung wird beispielsweise vom Mikrocontroller µC gemessen. Die Ladespannung VUP ist mit dem Eingang der Ladestromquelle LSQ verbunden, die eine Parallelschaltung des Stromventils SV sowie einer entgegen Flussrichtung geschalteten Diode D2 aufweist, um einen Rückfluss aus dem Kondensator CER, der an den Ausgang der Ladestromquelle LSQ angeschlossen ist, zu ermöglichen. Als Stromventil SV wird ein Transistor T5 verwendet. Die Diode D2 ist in der Regel Bestandteil von dem Transistor T5. Ein Strom ist dabei zwischen 0 und 930 mA über die SPI-Schnittstelle programmierbar. Der an den Ausgang der Ladestromquelle LSQ angeschlossene Kondensator CER ist gegen Masse geschaltet und weiterhin an den Zündkreis, der nicht dargestellt ist, angeschlossen. Die Spannung VUP wird jedoch nicht nur von der Ladestromquelle LSQ aufgenommen, sondern auch von dem Abwärtswandler DC1, der die Spannung VUP in die Spannung VAS, nämlich 7,2 V abwärts wandelt. Der Abwärtswandler DC1 ist invertierend an den Aufwärtswandler AW angeschlossen, um den Wechselanteil an der Regelspannung VUP zu reduzieren.

Die Spannung VUP wird über einen Stromshunt R2 im Abwärtswandler DC1 mit einem nachfolgend geschalteten Ladetransistor T3 (P-Kanal) am Source verbunden und über seinen Drain an die Induktivität L2 des Abwärtswandlers angeschlossen. Ein weiterer synchroner Freilauftransistor T4 (N-Kanal) ist mit dem Sourceanschluss an Masse geschaltet und mit dem Drainanschluss an die Induktivität L2 sowie dem Drain von T3. Anstelle von T4 kann auch eine einfache ultraschnelle Freilaufdiode (Shottky Diode) eingesetzt werden. Diese ist an der Anode mit Masse verbunden und mit der Kathode an die Induktivität L2 und den Drain des Transistors T3 angeschlossen. Die Induktivität L2 ist an den Regeleingang des Abwärtswandlers DC1 angeschlossen und bildet hier die Regelspannung VAS$_r$. Auch hier ist wie beim Aufwärtswandler dieser Regeleingang zusammen mit der Stromzuführung von L2 an eine kapazitive Last angeschlossen, nämlich die Kondensatoren C3 und C4 die den Ausgang des Abwärtswandlers bilden. Zwischen C3/C4(+) und dem Massefußpunkt lässt sich die abwärtsgewandelte Spannung VAS abgreifen. Diese Spannung VAS von 6.4V...7.2V wird vorliegend vom Abwärtswandler DC2 aufgenommen, der dafür den Stromshunt R3 die Schalttransistoren T7 und T8 aufweist und die Induktivität L3. DC2 ist analog* zu DC1 aufgebaut. Damit wird die Ausgangsspannung VST gebildet, die zwischen 1,2 und 3,3 V liegt und von den Komponenten im Steuergerät aufgenommen wird. Über einen Linearregler LR, der an den Abwärtswandler DC1 angeschlossen ist, wird die Spannung von 5 V nach einem Stromshunt R4 und dem Regel-Transistor T6 ausgegeben. Diese Spannung kann der Versorgung für den CAN-Bus bzw. Flexray-Bus dienen kann. Auch an diesen Ausgang des Linearreglers LR ist eine kapazitive Last mit den Kondensatoren C41 und C44, die parallel aus Redundanzgründen geschaltet sind, vorgesehen.

Auch der Abwärtswandler DC2 besitzt einen P-Kanal Ladetransistor T7 und einen N-Kanal Freilauftransistor T8 oder anstelle von T8 eine Freilaufdiode. Die Spannung VAS wird über einen Stromshunt R3 im Abwärtswandler DC2 mit einem nachfolgend geschalteten Ladetransistor T7 (P-Kanal) am Source verbunden und über seinen Drain an die Induktivität L3 des Abwärtswandlers angeschlossen. Ein weiterer synchroner Freilauftransistor T8 (N-Kanal) ist mit dem Sourceanschluss an Masse geschaltet und mit dem Drainanschluss an die Induktivität L3 sowie dem Drain von T7. Anstelle von T8 kann auch eine einfache ultraschnelle Freilaufdiode (Shottky Diode) eingesetzt werden. Diese ist an der Anode mit Masse verbunden und mit der Kathode an die Induktivität L3 und den Drain des Transistors T7 angeschlossen.

Auch der Ausgang des Abwärtswandlers DC2 ist mit der Parallelschaltung der Kondensatoren C43 und C44 kapazitiv belastet. Damit liegt eine Serienschaltung der Abwärtswandler DC1 und DC2 vor, die jeweils am Ausgang funktional gleich beschaltet sind wie der Aufwärtswandler AW, nämlich kapazitiv. Weiterhin werden die Wandler alle so betrieben, dass der Wechselanteil am Ausgang der Wandler reduziert wird. Dies führt zu einer höheren Stabilität.

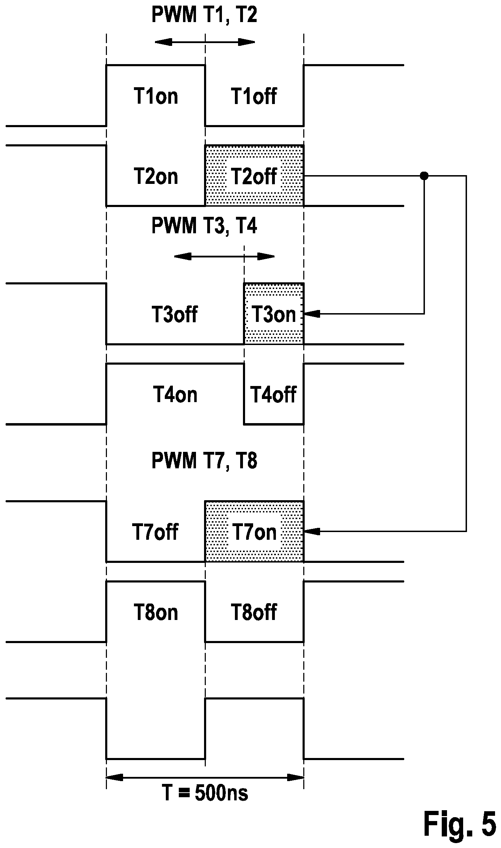

Figur 5 zeigt die Modulation der Transistoren der Schaltwandler AW, DC1 und D2. Sie zeigt insbesondere den invertierten Betrieb mit einer teilweisen Phasenüberdeckung. Dabei weist die obere Darstellung die Modulation über Pulsweitenmodulation der Transistoren T und T2 des Aufwärtswandlers AW an und zeigt dann die Transistoren an und abgeschaltet sind. In der ersten Phase ist die Ladephase zu sehen und in der zweiten Phase die Freilaufphase. Im mittleren Diagramm ist die Pulsweitenmodulation der Transistoren T3 und T4 zu sehen des Abwärtswandlers DC1, die eine teilweise Überdeckung von Lade- und Freigabephase zeigt, Hier ist es genau umgedreht, zunächst ist eine Freilaufphase zu sehen und dann eine Ladephase. Damit ist in der Freigabephase des Aufwärtswandlers AW auch eine Energieentnahme durch den Abwärtswandler DC1 zu sehen. Entsprechend ist das Verhältnis der beiden Abwärtswandler DC1 und DC2, was durch das mittlere und untere Zeitschema zu sehen ist. Der Takt der Wandler beträgt vorliegend 500 ns. Ein Takt umfasst die Lade- und Freigabephase.

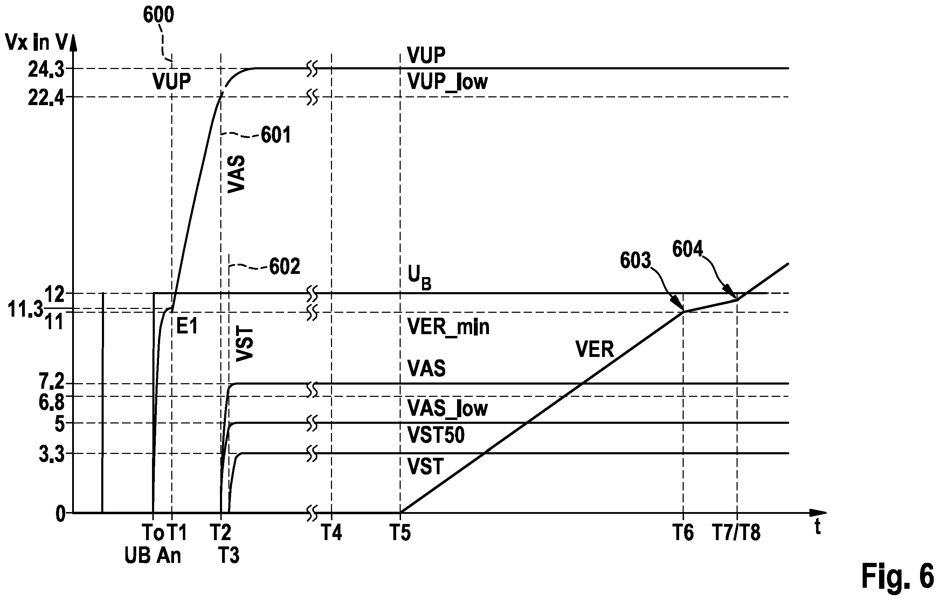

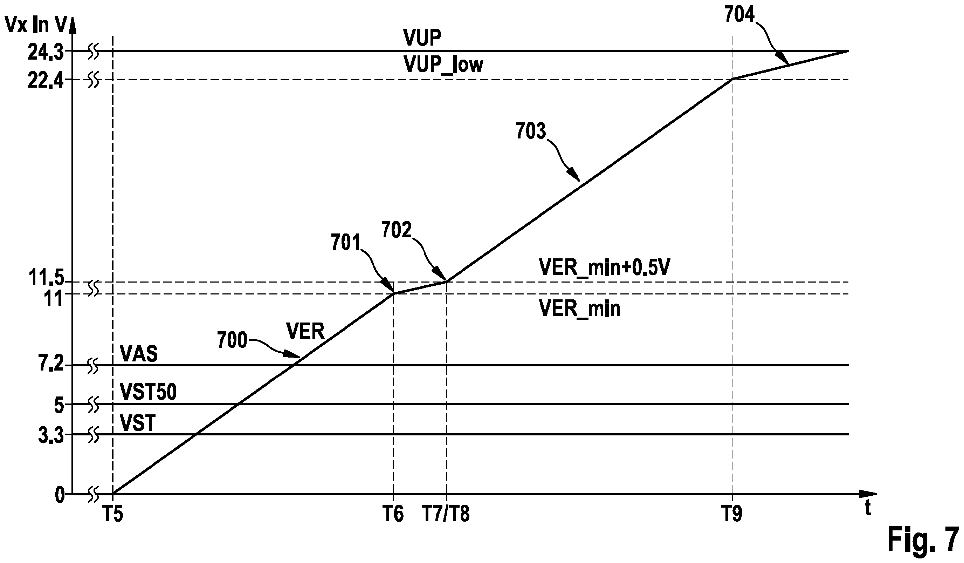

In den folgenden beiden Spannungszeitdiagrammen Figur 6 und 7 wird die Funktionsweise der Schaltung gemäß Figur 4 näher erläutert. Figur 6 zeigt die Spannungen vom Einschalten der Batteriespannung UB bis zur Messung des äquivalenten Innenwiderstands der Energiereserve CER. Figur 7 zeigt das Spannungszeitdiagramm vom Beginn der Aufladephase der Energiereserve CER bis zum Erreichen der Regelspannung durch die Energiereserve CER.

Figur 6 zeigt zum Zeitpunkt T0, dass die Spannungsversorgung eingeschaltet wird. Das ist die Batteriespannung UB, die beispielsweise 12 V erreicht. Der Schaltwandler läuft an 600 und gibt an seinem Ausgang die Spannung VUP aus. Der Anstieg entspricht der Versorgungsimpedanz des Fahrzeugs dem V-Filter V-F der Induktivität L1 und der kapazitiven Last C1 und C2. Dieser Anstieg ist vorliegend sehr schnell. Zum Zeitpunkt T1, das sind ungefähr 30 bis 70 $\mu$s nach T0, startet der Schaltwandler AW nach Aufbau von mindestens zwei stabilen ASICinternen Referenzspannungen und einer definierten Wartezeit, die sich durch einen Filter ergibt. Die Referenzspannungen werden auf eine Differenz geprüft, d.h. liegt ein Unterschied vor, liegt ein Fehler vor. Die Wartezeit wird mittels eines Zählers gemessen.

Zum Zeitpunkt T2 fängt nun auch der Abwärtswandler DC1 an zu laufen, was mit 601 bezeichnet ist. Dies geschieht sobald die Ausgangsspannung des Aufwärtswandlers VUP > als ein vorgegebener Wert VUP_low ist. Dies erkennt der Abwärtswandler DC1 selber.

Zum Zeitpunkt T3 startet nun auch der Schaltregler DC2, was mit 602 bezeichnet ist und auch der Linearregler LR sobald die Ausgangsspannung des ersten Abwärtswandlers DC1 einen vorgegebenen Schwellwert VAS_low überschreitet. Zum Zeitpunkt T4 erfolgt ein Power-On-Reset durch Freigabe nach Erstellung stabiler Spannungen. Vint ist eine interne Spannung, aus der die Referenzspannungen gebildet werden, und wird beispielsweise aus einer Zenerspannung gebildet. VRefl ist eine sogenannte Bandgapspannung, die sich aus einer Transistor-Emitter-Spannung und einem additiven Anteil zur Temperaturkompensation zusammensetzt. Sie entspricht der Bandlücke des Siliziums. Die Ausgangsspannung VAS des ersten Abwärtswandlers ist in einem Regelband und auch die Spannungen des Linearregler LR und des zweiten Abwärtswandlers DC2 sind in einem jeweiligen Regelband und zwar nach einer definierten Ladezeit von 2 bis 20 ms, die über einen Zähler festgestellt wird. Die Spannungen werden durch den System-ASIC selbst überwacht, der die Wandler beinhaltet. Zum Zeitpunkt T5 erfolgt die Programmierung der Ladestromquelle LSQ durch den Mikrocontroller. Es erfolgt der Start der Energieserveladung durch einen Primärstromniveau von beispielsweise 210 mA. Damit steigt nun die Spannung an der Energiereserve VER linear an. Zum Zeitpunkt T6 erreicht die Spannung an der Energiereserve VER den Wert VER_min beispielsweise 11 V. Das Primärstromniveau wird automatisch auf einen Messstromniveau von beispielsweise 90 mA umgeschaltet und einen Zähler mit mindestens 10 Bit gestartet. Zum Zeitpunkt T7 erreicht die Spannung den Wert VER_min +0,5 V. Dann wird der Zähler gestoppt. Der Zählerstand wird als Kapazitätsmesswert bis zum nächsten Power-On-Reset gespeichert und es wird auch das Stromniveau für den Test des äquivalenten Innenwiderstands umgeschaltet. Dieses Stromniveau beträgt 930 mA.

Zum Zeitpunkt T8, das sind T7 + 10 $\mu$s wird geprüft, ob die Spannung über der Energiereserve CER <= VER_min + 1 V, und ob diese Spannung <= VER_min + 1,5 V ist. Die Entscheidungsflaggen werden bis zum nächsten Power-on-Reset gespeichert, danach wird auf das programmierte Primärstromniveau umgeschaltet.

Dies ist auch in Figur 7 gezeigt. Das Primärstromniveau führt zum ersten Anstieg 700 zwischen den Zeitpunkten T5 und T6, die Messung zwischen Kapazität und des äquivalenten Innenwiderstands erfolgt zwischen T6 und T8. Die zweite Ladephase erfolgt zwischen T8 und T9, das mit 703 bezeichnet ist. Zum Zeitpunkt T9 erreicht die Spannung über der Energiereserve CER den Wert VER_low = 22,8 V. Das Stromniveau wird automatisch auf den programmierten Erhaltungswert gesetzt, beispielsweise 60 mA. Die Spannung über der Energiereserve wird nun mit der reduzierten Geschwindigkeit auf den Regelwert der Spannung VUP = 22,4 V gebracht. Dies ist mit dem Anstieg 704 bezeichnet.

Durch die Trennung der Energiereserve CER vom Aufwärtswandler AW ist das Airbag-Versorgungssystem bereits zum Zeitpunkt T4 bereit. T4 ist zwischen 3 bis 21 ms, je nach Festlegung der Wartezeit. Hierdurch lassen sich neue Funktionalitäten wie das sogenannte Eco-Mode erzielen. Das System führt Funktionen nach Wunsch, beispielsweise Diagnosen-Kommunikation aus, ohne die Airbag-Applikation zu starten und durch Laden der Energiereserve die Zündbereitschaft zu haben. Dies kann beispielsweise für den Service oder einer Fahrzeugvorführung, usw. verwendet werden.

Durch die Programmierung eines geeigneten Primärstromniveaus, also dem Ladestrom, lassen sich zum einen Anforderungen nach einem maximalen Steuergeräte-Eingangstrom während der Erzielung der Feuerbereitschaft, das ist die Ladephase der Energiereserve erreichen, zum anderen eine gewünschte Ladezeit nach Auswahl der nötigen Energiereservegröße.

Der Kapazitätstest in dieser Ladephase benötigt keine weiteren Messquellen als die bereits vorhandene programmierbare Ladestromquelle LSQ. Durch Verwendung zweier Komparatorwerte VER_mind und VER_min +0,5 V kann die Ladezeit mittels eines integrierten Zählers ermittelt werden, die benötigt wird, um das Messband von 0,5 V zu durchlaufen. Als Messstrom wird einheitlich beispielsweise 90 mA verwendet. Die Kapazität CER bestimmt sich demnach durch (90 mA x T Mess) / 0,5 V) bei einer Messzeit von 102,3 ms ergibt dies 18,4 mF.

Der sogenannte ESR-Test, das ist der äquivalente Innenwiderstand der Energiereserve, in dieser Ladephase benötigt ebenfalls keine weiteren Messquellen als die bereits vorhandene programmierbare Ladestromquelle LSQ. Durch Verwendung zweier weiterer Komparatorwerte, nämlich VER_min +1 V und VER_min +1,5 V, kann ermittelt werden, ob der Innenwiderstand der Energiereserve ausreichend klein ist. Bei einer Messstromänderung von 90 mA auf 930 mA wird die Komparatorschwelle VER_min +1 V 10 μs nach Anlegen des Stromstroms abgefragt. Die μs sind wählbar und sind vorliegend derart gewählt, um das Abklingen unduktiver Effekte ohne nennenswerte kapazitive Nachladung auszugleichen. Ist diese Komparatorschwelle überschritten, so beträgt der Innenwiderstand mehr als 0,6 Ω. Ebenso wird die Komparatorschwelle VER_min +1,5 V 10 μs nach Anlegen des Messstroms abgefragt. Ist diese überschritten, so beträgt der Innenwiderstand mehr als 1,2 Ω. Dies ist dann ein zu hoher Wert und eine Warnung wie eine beleuchtete Lampe wird angezeigt.

Durch das Merkmal des invertierten Betriebs seriengekoppelter Wandler entsprechend Figur 4 wird versucht, in der Sperrphase des Aufwärtswandlers AW den angekoppelten Abwärtswandler DC1 wenigstens zeitweise in die Energieaufnahme zu bringen. Diese Maßnahme verringert den Wechselanteil am Ausgang des Aufwärtswandlers AW. Die gleiche Methode wird im Bezug auf die Verkopplung der Abwärtswandler DC1 und DC2 angewendet. Durch das Merkmal induktiv entkoppelter Wandlerausgangskapazitäten durch entsprechende Leitungsstücke, lässt sich eine stabile Wandler-Regler-Information mit der Stromänderung ableiten.

Durch das Merkmal einer weiteren Komparatorschwelle nach Aufladung der Energiereserve, wobei die Komparatorschwelle mit VUP_low +0,33 V bezeichnet ist, kann eine zyklische Kapazitätsmessung der Energiereserve ausgeführt werden. Die Messung startet nach einem Lesevorgang des Mikrocontrollers auf das Ergebnisregister der zyklischen Kapazitätsmessung. Das Ergebnisregister ist ebenfalls auf dem System-ASIC angeordnet. Durch diesen Vorgang wird die Ladestromquelle LSQ gesperrt. Die Spannung sinkt durch Lasten, die an der Spannung VER anliegen, wie ein Spannungsteiler, ein Sicherheitsschalter, usw. ab. Erreicht die Spannung VER den Wert VER_low so wird mit dem Messstrom, beispielsweise 60 mA die Energiereserve wieder geladen, bis VUP_low +0,33 V erreicht ist. Durch die Wahl eines verringerten Messhubs und eines darauf entsprechend abgestimmten Messstroms bleibt die Auflösung exakt auf dem Wert der initialen Kapazitätsmessung. Erreicht der Wert VER, also der Spannung über der Energiereserve den Wert VER_low +0,33 V wird zusätzlich eine Spannungsflagge in einem Messwertspeicher, der auch auf dem System-ASIC angeordnet ist, auf gut gesetzt. Die Versorgungsspannungsüberwachung führt die Spannungen VUP, VER, VAS, VST50, VST über einen Multiplexer, einem Analog-DigitalWandler des System-ASICs zu, so dass diese Werte seriell vom Mikrocontroller über die SPI-Schnittstelle ausgelesen werden können.

Vorliegend ist auch eine Vermeidung von Messfehlern bei der Kapazitätsmessung und der Messung des äquivalenten Innenwiderstands der Energiereserve vorgesehen. Diese Messfehler sollen bei der Situation eines Einbruchs der Batteriespannung vermieden werden.

Hierzu werden vorliegend zwei alternative Verfahren vorgeschlagen:

a) Die Eingangsspannung UB wird mit einem Komparator überwacht, sinkt diese während einer laufenden Messung mindestens einmal unter einer Schwelle ab, wird jede laufende Messung mit nicht ausführbar im Messspeicher gekennzeichnet.

b) Der Stromregler der Ladestromquelle LSQ erzeugt einen Einregelstatus in der Messanwendung. Nur wenn dieser bis auf Einschwingzeiten die gleiche Einregelzeit erreicht wie die Messzeit selbst, ist die laufende Messung ohne Störung verlaufen und damit als gültig anzusehen, andernfalls erhält der Messwert im Messspeicher eine nicht-ausführbar-Kennzeichnung. Zur Erfassung des Einregelstatus kann ebenfalls ein 10 Bitzähler mit einer Taktfrequenz von 5 kHz eingesetzt werden, auch geringere Auflösungen sind vorliegend denkbar.

## Patentansprüche

1. Steuergerät für einen Betrieb eines Sicherheitssystems für ein Fahrzeug mit:

- einem Aufwärtswandler (AW), der als einen Schaltwandler ausgebildet ist, und der eine von einer Fahrzeugbatteriespannung abgeleitete Eingangsspannung (UB) in eine höhere Ladespannung (VUP) an seinen Ausgang wandelt,
- wenigstens einem Energiereservespeicher (CER), der mittels der Ladespannung (VUP) für den Betrieb des Sicherheitssystems in einem Autarkiefall aufgeladen wird, wobei zwischen dem Aufwärtswandler (AW) und dem wenigstens einem Energiereservespeicher (CER) eine Ladestromquelle (LSQ) geschaltet ist,

**dadurch gekennzeichnet, dass**
die Ladestromquelle (LSQ) im Betrieb programmierbar ist und konfiguriert ist, einen Ladestrom für den wenigstens einen Energiereservespeicher in Abhängigkeit von der Programmierung festzulegen, wobei das Steuergerät eine Logik aufweist, die konfiguriert ist, in Abhängigkeit von wenigstens einem elektrischen Parameter am Energiereservespeicher (CER) während des Aufladens des Energiereservespeichers (CER) eine erste Messung einer Kapazität des Energiereservespeichers (CER) und im Anschluss daran eine Messung eines äquivalenten Innenwiderstands des Energiereservespeichers (CER) auszuführen.

2. Steuergerät nach Anspruch 1, **dadurch gekennzeichnet, dass** für die Programmierung eine serielle Schnittstelle (SPI) vorgesehen ist, an die ein Rechner anschließbar ist, um die Programmierung vorzunehmen.

3. Steuergerät nach Anspruch 1 oder 2, **dadurch gekennzeichnet, dass** am Ausgang des Aufwärtswandlers (AW) eine kapazitive Last (C1, C2) zur Einstellung einer Anstiegszeit der Ladespannung (VUP) angeschlossen ist.

4. Steuergerät nach Anspruch 3, **dadurch gekennzeichnet, dass** die Logik wenigstens einen Komparator für einen Vergleich des wenigstens eines elektrischen Parameters mit einer vorgegebenen Schwelle aufweist, wobei die erste Messung der Kapazität und die Messung des Innenwiderstands in Abhängigkeit von diesem Vergleich ausgeführt werden.

5. Steuergerät nach Anspruch 3 oder 4, **dadurch gekennzeichnet, dass** die Logik derart ausgebildet ist, dass die Logik nach dem Aufladen der Energiereserve zyklisch eine weitere Messung der Kapazität durchführt.

6. Verfahren für den Betrieb eines Sicherheitssystems für ein Fahrzeug mit folgenden Verfahrenschritten:

   - Wandeln einer von einer Fahrzeugbatteriespannung abgeleiteten Eingangsspannung (UB) in eine höhere Ladespannung (VUP) an einem Ausgang eines Auswärtswandlers (AW), der als Schaltwandler ausgebildet ist,
   - Aufladen wenigstens eines Energiereservespeichers (CER) mittels der Ladespannung (VUP) für den Betrieb des Sicherheitssystems in einem Autarkiefall, **dadurch gekennzeichnet, dass** zwischen dem Aufwärtswandler (AW) und dem wenigstens einem Energiereservespeichers (CER) eine im Betrieb programmierbare Ladestromquelle (LSQ) geschaltet wird, die einen Ladestrom für den wenigstens einen Energiereservespeicher (CER) in Abhängigkeit von der Programmierung festlegt

   **dadurch gekennzeichnet, dass**
   die Aufladung des wenigstens einen Energiereservespeichers (CER) durch die Ladestromquelle (LSQ) in einem ersten Zeitabschnitt und einem dritten Zeitabschnitt mit einem ersten Stromniveau, in einem zweiten Abschnitt mit einem Teststrom und in einem vierten Zeitabschnitt mit einem zweiten Stromniveau, das unter dem ersten Stromniveau liegt, erfolgt, wobei der erste, zweite, dritte und vierte Zeitabschnitt in dieser Reihenfolge aufeinanderfolgen und im zweiten Zeitabschnitt eine erste Messung einer Kapazität und eines äquivalenten Innenwiderstands des Energiereservespeichers (CER) erfolgen, wobei die Umschaltung zwischen dem ersten Stromniveau und dem Teststrom sowie dem ersten und dem zweiten Stromniveau aufgrund einer Spannung über dem Energiereservespeicher (CER) erfolgt.

7. Verfahren nach Anspruch 6, **dadurch gekennzeichnet, dass** die Programmierung über eine serielle Schnittstelle (SPI) vorgenommen wird.

8. Verfahren nach einem der Ansprüche 6 oder 7, **dadurch gekennzeichnet, dass** das Steuergerät dadurch in einen Energiesparmodus versetzt wird, das nach einem Hochlaufen auf die Ladespannung (VUP) die Ladestromquelle (LSQ) gesperrt bleibt, so dass keine Aufladung des wenigstens einen Energiereservespeichers (CER) erfolgt und ein Rechner des Steuergeräts durch wenigstens einen an dem Ausgang des Aufwärtswandlers (AW) angeschlossenen Abwärtswandler (DC1) mit elektrischer Energie versorgt wird.

**Claims**

1. Controller for operating a safety system for a vehicle, having:

   - a step-up converter (AW), which is designed as a switching converter and which converts an input voltage (UB), derived from a vehicle battery voltage, into a higher charging voltage (VUP) at its output,
   - at least one energy reserve store (CER), which is charged by way of the charging voltage (VUP) in order to operate the safety system in a self-sufficiency mode, wherein a charging current source (LSQ) is connected between the step-up converter (AW) and the at least one energy reserve store (CER),

   **characterized in that**
   the charging current source (LSQ) is able to be programmed during operation and is configured so as to set a charging current for the at least one energy reserve store depending on the programming, wherein the controller has a logic unit that is configured, depending on at least one electrical parameter at the energy reserve store (CER), during the charging of the energy reserve store (CER), so as to perform a first measurement of a capacitance of the energy reserve store (CER), and then to perform a measurement of an equivalent internal resistance of the energy reserve store (CER).

2. Controller according to Claim 1, **characterized in that** a serial interface (SPI) is provided for the programming, to which interface a computer is able to be connected in order to carry out the programming.

**3.** Controller according to Claim 1 or 2, **characterized in that** a capacitive load (C1, C2) for setting a rise time of the charging voltage (VUP) is connected at the output of the step-up converter (AW).

**4.** Controller according to Claim 3, **characterized in that** the logic unit has at least one comparator for comparing the at least one electrical parameter with a predefined threshold, wherein the first measurement of the capacitance and the measurement of the internal resistance are performed depending on this comparison.

**5.** Controller according to Claim 3 or 4, **characterized in that** the logic unit is designed such that the logic unit performs a further measurement of the capacitance in a cyclic manner following charging of the energy reserve.

**6.** Method for operating a safety system for a vehicle, having the following method steps:

- converting an input voltage (UB), derived from a vehicle battery voltage, into a higher charging voltage (VUP) at an output of a step-up converter (AW), which is designed as a switching converter,
- charging at least one energy reserve store (CER) by way of the charging voltage (VUP) in order to operate the safety system in a self-sufficiency mode, **characterized in that** a charging current source (LSQ) able to be programmed during operation is connected between the step-up converter (AW) and the at least one energy reserve store (CER), which charging current source sets a charging current for the at least one energy reserve store (CER) depending on the programming,

**characterized in that**
the charging of the at least one energy reserve store (CER) by the charging current source (LSQ) takes place with a first current level in a first time interval and a third time interval, with a test current in a second interval and with a second current level, lower than the first current level, in a fourth time interval, wherein the first, second, third and fourth time interval follow one another in this order and a first measurement of a capacitance and of an equivalent internal resistance of the energy reserve store (CER) take place in the second time interval, wherein the switching between the first current level and the test current and the first and the second current level takes place on account of a voltage across the energy reserve store (CER).

**7.** Method according to Claim 6, **characterized in that** the programming is carried out via a serial interface (SPI).

**8.** Method according to either of Claims 6 and 7, **characterized in that** the controller is put into an energy-saving mode **in that**, after ramping up to the charging voltage (VUP), the charging current source (LSQ) remains blocked, such that charging of the at least one energy reserve store (CER) does not take place, and a computer of the controller is supplied with electrical energy by at least one step-down converter (DC1) connected to the output of the step-up converter (AW).

## Revendications

**1.** Contrôleur pour faire fonctionner un système de sécurité pour un véhicule, comprenant :

- un convertisseur élévateur (AW) qui est réalisé sous la forme d'un convertisseur à découpage et qui convertit une tension d'entrée (UB) dérivée d'une tension de batterie de véhicule en une tension de charge (VUP) plus élevée à sa sortie,
- au moins un accumulateur de réserve d'énergie (CER), lequel est chargé au moyen de la tension de charge (VUP) pour faire fonctionner le système de sécurité dans un cas d'autonomie, une source de courant de charge (LSQ) étant commutée entre le convertisseur élévateur (AW) et l'au moins un accumulateur de réserve d'énergie (CER),

**caractérisé en ce que**
la source de courant de charge (LSQ), en fonctionnement, est programmable et configurée pour définir un courant de charge pour l'au moins un accumulateur de réserve d'énergie en fonction de la programmation, le contrôleur possédant une logique qui est configurée pour effectuer, en fonction d'au moins un paramètre électrique au niveau de l'accumulateur de réserve d'énergie (CER) pendant la charge de l'accumulateur de réserve d'énergie (CER), une première mesure d'une capacité de l'accumulateur de réserve d'énergie (CER) et, suite à celle-ci, une mesure d'une résistance interne équivalente de l'accumulateur de réserve d'énergie (CER).

**2.** Contrôleur selon la revendication 1, **caractérisé en ce qu'**une interface série (SPI) est présente pour la programmation, à laquelle peut être connecté un ordinateur en vue de réaliser la programmation.

**3.** Contrôleur selon la revendication 1 ou 2, **caractérisé en ce qu'**une charge capacitive (C1, C2) est raccordée à la sortie du convertisseur élévateur (AW) pour régler un temps de croissance de la tension de charge (VUP).

**4.** Contrôleur selon la revendication 3, **caractérisé en ce que** la logique possède au moins un comparateur pour une comparaison de l'au moins un paramètre électrique avec un seuil prédéfini, la première mesure de la capacité et la mesure de la résistance interne étant effectuées en fonction de cette comparaison.

**5.** Contrôleur selon la revendication 3 ou 4, **caractérisé en ce que** la logique est configurée de telle sorte que la logique effectue cycliquement une mesure supplémentaire de la capacité après la charge du réservoir d'énergie.

**6.** Procédé pour faire fonctionner un système de sécurité pour un véhicule, comprenant les étapes suivantes :

> - conversion d'une tension d'entrée (UB) dérivée d'une tension de batterie de véhicule en une tension de charge (VUP) plus élevée à une sortie d'un convertisseur élévateur (AW) qui est réalisé sous la forme d'un convertisseur à découpage,
> - charge d'au moins un accumulateur de réserve d'énergie (CER) au moyen de la tension de charge (VUP) pour faire fonctionner le système de sécurité dans un cas d'autonomie, **caractérisé en ce qu'**une source de courant de charge (LSQ) programmable en fonctionnement est commutée entre le convertisseur élévateur (AW) et l'au moins un accumulateur de réserve d'énergie (CER), laquelle définit un courant de charge pour l'au moins un accumulateur de réserve d'énergie (CER) en fonction de la programmation,
>
> **caractérisé en ce que**
> la charge de l'au moins un accumulateur de réserve d'énergie (CER) par la source de courant de charge (LSQ) dans un premier intervalle de temps et un troisième intervalle de temps s'effectue avec un premier niveau de courant, dans un deuxième intervalle avec un courant de test et, dans un quatrième intervalle de temps, avec un deuxième niveau de courant qui est inférieur au premier niveau de courant, les premier, deuxième, troisième et quatrième intervalles de temps se succédant dans cet ordre et, dans le deuxième intervalle de temps sont effectuées une première mesure d'une capacité et d'une résistance interne équivalente de l'accumulateur de réserve d'énergie (CER), la permutation entre le premier niveau de courant et le courant de test ainsi qu'entre le premier et le deuxième niveau de courant s'effectuant sur la base d'une tension aux bornes de l'accumulateur de réserve d'énergie (CER).

**7.** Procédé selon la revendication 6, **caractérisé en ce que** la programmation est effectuée par le biais d'une interface série (SPI).

**8.** Procédé selon l'une des revendications 6 ou 7, **caractérisé en ce que** le contrôleur est placé dans un mode d'économie d'énergie par le fait qu'après une montée à la tension de charge (VUP), la source de courant de charge (LSQ) reste bloquée de sorte qu'aucune charge de l'au moins un accumulateur de réserve d'énergie (CER) n'a lieu, et un ordinateur du contrôleur est alimenté en énergie électrique par au moins un convertisseur abaisseur (DC1) raccordé à la sortie du convertisseur élévateur (AW).

**Fig. 1**

Fig. 2

Fig. 3

Fig. 4

**Fig. 5**

Fig. 6

EP 2 567 442 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19542085 B4
- DE 102004057690 A1
- EP 1789286 A1
- US 6094036 A